(19) Europäisches Patentamt
European Patent Office
Office européen des brevets

(11) **EP 2 999 950 B1**

## (12) EUROPÄISCHE PATENTSCHRIFT

(45) Veröffentlichungstag und Bekanntmachung des Hinweises auf die Patenterteilung:
**11.12.2019 Patentblatt 2019/50**

(21) Anmeldenummer: **14725411.4**

(22) Anmeldetag: **14.05.2014**

(51) Int Cl.:
*G01M 3/20* (2006.01)     *B01D 53/22* (2006.01)

(86) Internationale Anmeldenummer:
**PCT/EP2014/059845**

(87) Internationale Veröffentlichungsnummer:
**WO 2014/187709 (27.11.2014 Gazette 2014/48)**

(54) **SCHNÜFFELLECKSUCHER MIT NANOPORÖSER MEMBRANE**

SNIFFING LEAK DETECTOR HAVING A NANOPOROUS MEMBRANE

DÉTECTEUR DE FUITES PAR RENIFLAGE À MEMBRANE NANOPOREUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2013 DE 102013209438**

(43) Veröffentlichungstag der Anmeldung:
**30.03.2016 Patentblatt 2016/13**

(73) Patentinhaber: **Inficon GmbH**
**50968 Köln (DE)**

(72) Erfinder: **GERDAU, Ludolf**
**50189 Elsdorf (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**DE-A1- 4 326 267     US-A1- 2008 202 212**

**Beschreibung**

Die Erfindung betrifft einen Schnüffellecksucher zum Ansaugen eines zu analysierenden Gases.

Ein Schnüffellecksucher dient zur Gasanalyse und ist mit einer Schnüffelsonde zum Ansaugen des zu analysierenden Gases versehen. Die Gasanalyse erfolgt typischerweise mit einem Massenspektrometer im Hochvakuum. Bei der massenspektrometrischen Gasanalyse wird typischerweise Luft mit atmosphärischem Druck (Umgebungsluft) in der Umgebung eines vermuteten Lecks in einem Prüfkörper angesaugt. Der Prüfkörper wird mit einem Prüfgas wie z. B. Wasserstoff oder Helium gefüllt. Der Prüfgasdruck innerhalb des Prüfkörpers ist größer als der atmosphärische Druck der Umgebung, sodass das Prüfgas durch ein Leck aus dem Prüfkörper austritt und in die Luft im Bereich der Umgebung des Prüfkörpers gelangt. Die mit der Schnüffelsonde angesaugte Luft wird im Haupt- oder Teilstrom in das Hochvakuum eingelassen und dort mit Hilfe eines Massenspektrometers der Partialdruck des Prüfgases (Wasserstoff oder Helium) gemessen.

Ein kritisches Maß für die Qualität der Messung ist die Nachweisgrenze des Schnüffellecksuchers für das Prüfgas. Die Nachweisgrenze ist die minimal detektierbare Konzentration des Prüfgases in der angesaugten Luft. Je geringer die Nachweisgrenze ist, desto empfindlicher ist das Messsystem und mit umso größerer Genauigkeit kann der Prüfgasanteil ermittelt werden.

Es ist bekannt, in dem Gaseinlass in das Hochvakuum des Massenspektrometers eine gaspermeable Membrane anzuordnen, die von einem Teil des angesaugten Gases durchströmt wird. Bei den bekannten Membranen handelt es sich um gesinterte Keramikscheiben, die dazu dienen sollen, das vergleichsweise leichte Prüfgas Helium bzw. Wasserstoff zu bevorzugen und von den schwereren Gasanteilen weniger durchzulassen. Für eine massenspektrometrische Gasanalyse mit direktem Gaseinlass in das Hochvakuum des Massenspektrometers (Totaldruck <10$^{-4}$ mbar) sind die bekannten gesinterten Keramikscheiben geeignet. Bei Gaseinlass in das Vorvakuum der Hochvakuumpumpe, wie bei einem Gegenstromleckdetektor, reicht der Leitwert nicht aus, um den notwendigen, um ca. einen Faktor 100 höheren Gasstrom zu erzeugen.

US 2008/202212 A1 beschreibt ein Leckdetektionsverfahren mit einem Leckdetektor, der einen Testgaseinlass, eine an den Testgaseinlass angeschlossene Vakuumpumpe und einen Testgassensor, der über einen Weg mit dem Testgaseinlass verbunden ist, in dem eine für das Testgas permeable Membrane angeordnet ist.

DE 4326267 A1 offenbart als nachveröffentlichter Stand der Technik ein Lecksuchgerät mit einer in Bezug auf den Durchlass von Gasen selektiv wirkenden Membran.

Der Erfindung liegt die Aufgabe zugrunde, die Nachweisgrenze eines Schnüffellecksuchers zur massenspektrometrischen Gasanalyse zu verbessern, indem ein genügend großer, dennoch aber molekularer Leitwert zur Verfügung gestellt wird, der Wasserstoff bevorzugt gegenüber schwereren Gasen der Luft einlässt.

Der erfindungsgemäße Schnüffellecksucher ist definiert durch die Merkmale von Anspruch 1.

Bei dem erfindungsgemäßen Schnüffellecksucher erfolgt der Gaseinlass zum Massenspektrometer über eine von dem angesaugten Gas durchströmte poröse Membrane, deren Porendurchmesser kleiner oder gleich der freien Weglänge von Luft bei atmosphärischem Druck und bei Zimmertemperatur sind. Als atmosphärischer Druck wird ein Druck im Bereich von etwa 950 hPa bis 1050 hPa angesehen. Als Zimmertemperatur wird eine Temperatur im Bereich von ca. 15°C bis 25°C angesehen. Erfindungsgemäß wurde erkannt, dass Poren mit einem Durchmesser, der maximal der freien Weglänge von Luft bei atmosphärischem Druck und Zimmertemperatur entspricht, auch bei relativ hohem Druck, wie er vor der Einlassmembrane eines Schnüffellecksuchers herrscht, eine molekulare Gasströmung erzeugen. Dabei ist der Leitwert für die leichten Prüfgase Wasserstoff bzw. Helium besonders hoch, während der Leitwert für die schwereren, bei der Analyse unerwünschten Gase gering ist. Dadurch wird eine molekulare, das Prüfgas enthaltende Gasströmung in das Vakuum erzeugt, die nicht viskos ist, sondern in der sich die verschiedenen Moleküle unabhängig voneinander und unterschiedlich schnell bewegen. Die leichten Gase, zu denen die Prüfgase Wasserstoff und Helium gehören, bewegen sich besonders schnell wodurch im Hochvakuum ihr Anteil höher ist als im angesaugten Gasstrom und damit die Nachweisgrenze verbessert wird. Mit der bisherigen Sintermembrantechnik würde zwar auch eine gewisse Anreicherung erreicht, der eingelassene Gasstrom ist aber dabei so gering, dass die Nachweisgrenze sogar noch schlechter als bei Direkteinlass (z.B. über eine Blende) ist.

Die Erfindung basiert somit auf dem Gedanken, die Porenöffnungen möglichst klein und vorzugsweise mit möglichst gleichem Durchmesser zu gestalten. Von besonderem Vorteil ist es dabei, möglichst viele Poren vorzusehen, um trotz der geringen Porengröße eine vergleichsweise große Gasmenge durchzulassen.

Ähnliche Membranen sind aus einem anderen technischen Gebiet bekannt - nämlich der Ultrafiltration von Makromolekülen in Flüssigkeiten - und dienen dort nicht der Verbesserung der Nachweisgrenze eines Schnüffellecksuchers sondern einer definierten Abfilterung von Makromolekülen mit hoher Genauigkeit.

Der Porendurchmesser kann beispielsweise kleiner oder gleich 20 Nanometer (nm) sein. Der Durchmesser jeder Pore sollte maximal um etwa 50 % und vorzugsweise maximal um etwa 20 % von dem mittleren Durchmesser aller Poren abweichen, damit die Poren von möglichst ähnlicher Größe sind, um auch bei großen Druckunterschieden keine unerwünschten, schweren Gase durchzulassen.

Um dennoch einen ausreichend großen Gasanteil durchzulassen, sollte der Flächenanteil sämtlicher Poren mindestens etwa 20 % und vorzugsweise mindestens 40 % der gesamten Membranoberfläche betragen. Der Flächenanteil sämtlicher Poren kann in einem Bereich zwischen 25 % und 50 % der Membranoberfläche liegen.

Die Porendichte sollte möglichst groß sein. Vorzugsweise sollte die Membrane pro Quadratmikrometer ($\mu m^2$) ihrer Oberfläche mindestens 20 und vorzugweise mindestens 25 Poren aufweisen. Die Wandstärke zwischen benachbarten Poren, das heißt der geringste Abstand der Ränder benachbarter Poren, sollte möglichst gering sein und weniger als 100 nm und vorzugweise weniger als 80 nm betragen.

Die Scheibendicke der Membrane sollte kleiner als 100 $\mu m$ und vorzugsweise kleiner als 50 $\mu m$ und möglichst nur einige 10 $\mu m$ oder weniger betragen, um die Länge der Poren möglichst gering zu halten.

Der Quotient aus dem mittleren Durchmesser aller Poren und der mittleren freien Weglänge des angesaugten Gases (Luft) bei atmosphärischem Druck und Zimmertemperatur kann größer sein als 0,5. Dieser Quotient wird als Knudsen-Zahl bezeichnet. Für die mittlere freie Weglänge I und den Druck p der angesaugten Luft gilt:

$$\bar{I} \cdot p = 6{,}65 \cdot 10^{-5} m \cdot mbar \qquad \text{(bei 273,15 K)}$$

womit sich bei ca. 1000 mbar eine mittlere freie Weglänge von

$$\frac{6{,}65 \cdot 10^{-5} m \cdot mbar}{1000\ mbar} = 66{,}5\ nm$$

ergibt.

Mit dem erfindungsgemäßen Schnüffellecksucher ist es möglich, den maximalen Hochvakuumdruck von $10^{-4}$ mbar mit dem über das Vorvakuum im Gegenstrom eingelassenen Gas zu erzeugen, der in der massenspektrometrischen Gasanalyse die bestmögliche Nachweisgrenze bewirkt.

Die Merkmale der Erfindung sind besonders einfach und zuverlässig bei einer nanoporösen Membrane aus Aluminiumoxid zu realisieren.

Im Folgenden wird anhand der Figuren ein Ausführungsbeispiel der Erfindung näher erläutert. Es zeigen:

Figur 1    eine schematische Darstellung des Schnüffellecksuchers und
Figur 2    einen mikroskopischen Ausschnitt einer Draufsicht auf die Membrane.

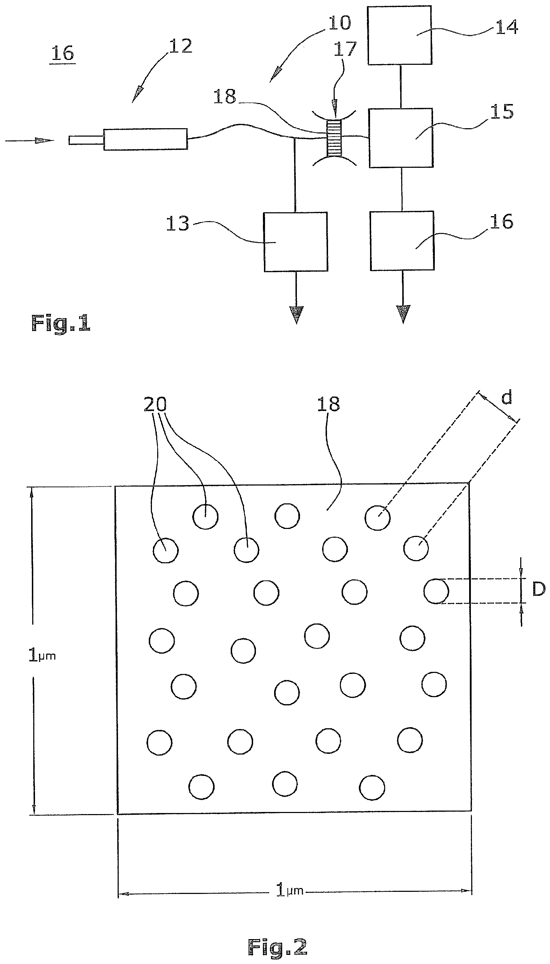

In Fig. 1 ist der erfindungsgemäße Schnüffellecksucher 10 dargestellt, der aus einer Schnüffelsonde 12, einer Förderpumpe 13, einem Massenspektrometer 14 und einer Vakuumpumpe 15, 16 besteht. Die Schnüffelsonde 12 ist mit einer Förderpumpe 13 zum Ansaugen des Gases durch die Schnüffelsonde 12 gasleitend verbunden. Das von der Förderpumpe 13 durch die Schnüffelsonde 12 angesaugte Gas wird dem Gaseinlass 17 einer Turbomolekularpumpe 15 zugeführt. Die Turbomolekularpumpe 15 bildet zusammen mit einer zugehörigen Vorvakuumpumpe 16 die Vakuumpumpe 15, 16 für das Massenspektrometer 14. Der Gaseinlass 17 weißt eine gasdurchlässige, poröse Membrane 18 auf, durch die das Gas in die Turbomolekularpumpe 15 gesaugt wird. Hierzu ist die Turbomolekularpumpe 15 gasleitend mit dem Massenspektrometer 14 zu dessen Evakuierung verbunden. Ventile oder Druckmessgeräte werden nicht benötigt.

Bei dem massenspektrometrischen Schnüffellecksucher 10 handelt es sich um einen Gegenstromlecksucher für leichte Gase. Das Gas wird dabei in das Vorvakuum der Vakuumpumpe 15, 16 eingelassen und nicht in das Hochvakuum des Massenspektrometers 14. Dabei diffundiert der leichte Anteil des angesaugten Gases bevorzugt in das Massenspektrometer 14. Infolgedessen kann eine große Gasmenge angesaugt werden, um eine besonders hohe Empfindlichkeit zu erzielen, während das leichte Gas über die Membrane 18 angereichert wird.

Ein mikroskopischer Ausschnitt einer Draufsicht auf die Oberfläche der Membrane 18 ist in Fig. 2 dargestellt. Die Membrane 18 weist eine Vielzahl von Poren 20 auf, die statistisch gleich über die Oberfläche der Membrane 18 verteilt angeordnet sind. Jede Pore 20 geht vollständig durch die Membrane 18 hindurch. Die Membrane ist eine Scheibe mit einer Dicke von ca. 30 $\mu m$, sodass die Länge jeder Pore 20 etwa 30 $\mu m$ beträgt. Die Länge jeder Pore 20 ist also gleich der Dicke der Membrane 18.

Fig. 2 zeigt, dass die Membrane 18 etwa 26 Poren pro $\mu m^2$ ihrer Oberfläche aufweist. Der mittlere kleinste Abstand d benachbarter Poren 20 (Mittelpunkt - Mittelpunkt) beträgt 100 nm. Mit mittlerem kleinstem Abstand ist der Mittelwert sämtlicher kleinster von Mittelpunkt zu Mittelpunkt der Poren gemessener Abstände direkt benachbarter Poren gemeint. Der mittlere Durchmesser D aller Poren 20 beträgt 20 nm und kann in einem alternativen Ausführungsbeispiel auch weniger als 20 nm betragen.

Der Flächenanteil sämtlicher Poren 20 an der Oberfläche der Membrane 18 beträgt 50 %, sodass also insgesamt die Hälfte der Membranoberfläche gasdurchlässig ausgebildet ist.

Die Erfindung basiert somit auf dem Gedanken, dass als Gaseinlass nicht eine Blende mit nur einer Öffnung, sondern vielmehr eine gasdurchlässige, poröse Membrane verwendet wird, deren einzelne Löcher bei dem herrschenden Druck am Gaseinlass die Knudsenbedingung für Molekularströmung erfüllen. Die Lochdichte ist dabei so hoch gewählt, dass trotz der geringen Porengröße eine solche Gasmenge durchgelassen wird, dass der Hochvakuumdruck von $10^{-4}$ mbar erreicht werden kann. Dabei wird das physikalische Prinzip genutzt, dass bei molekularer Gasströmung die Gasanteile eines Gasstroms sich unabhängig voneinander (molekular) bewegen und jeweils einen eigenen Leitwert besitzen. Molekulare Leitwerte sind umgekehrt proportional zu der Wurzel aus dem Molekulargewicht des jeweiligen Gases. Wasserstoff hat daher einen erheblich besseren Leitwert durch eine gegebene Öffnung als Stickstoff und als Sauerstoff und als sämtliche anderen Bestandteile von Luft.

**Patentansprüche**

1. Schnüffellecksucher (10) zum Ansaugen und Analysieren von Gas, mit einer Schnüffelsonde (12), einer mit der Schnüffelsonde (12) verbundenen Gasförderpumpe (13) zum Ansaugen des Gases durch die Schnüffelsonde (12) mit atmosphärischem Druck, einer einen Gaseinlass (17) aufweisenden Vakuumpumpe (15, 16), wobei der Gaseinlass eine gasdurchlässige Membrane (18) aufweist, und mit einem mit der Vakuumpumpe (15, 16) verbundenen Massenspektrometer (14) zum Analysieren des angesaugten Gases im Hochvakuum, wobei der von der Gasförderpumpe durch die Schnüffelsonde angesaugte Gasstrom an der Membrane (18) vorbeigeführt wird, so dass die Membrane (18) einen Teil des Gases in das Vorvakuum der Vakuumpumpe (15, 16) zur massenspektrometrischen Analyse des Gases im Hochvakuum einströmen lässt,
**dadurch gekennzeichnet,**
**dass** die Membrane (18) eine poröse Membrane mit gasdurchlässigen Poren (20) ist, wobei jede Pore (20) vollständig durch die Membrane (18) hindurchgeht und die Durchmesser (D) der Poren (20) kleiner oder gleich der freien Weglänge (I) von Luft bei atmosphärischem Druck und Zimmertemperatur sind, und
**dass** der Flächenanteil sämtlicher Poren mindestens etwa 20 % der gesamten Membranoberfläche beträgt.

2. Schnüffellecksucher (10) nach Anspruch 1, **dadurch gekennzeichnet, dass** der massenspektrometrische Schnüffellecksucher (10) ein Gegenstromlecksucher ist.

3. Schnüffellecksucher (10) nach Anspruch 1 oder 2, **dadurch gekennzeichnet, dass** die Porendurchmesser jeweils kleiner als oder gleich 20 nm sind.

4. Schnüffellecksucher (10) nach einem der vorhergehenden Ansprüche, **dadurch gekennzeichnet, dass** der Durchmesser jeder Pore (20) maximal um 50 % und vorzugsweise weniger als 20 % von dem mittleren Durchmesser aller Poren (20) der Membrane (18) abweicht.

5. Schnüffellecksucher (10) nach einem der vorhergehenden Ansprüche, **dadurch gekennzeichnet, dass** der gesamte Flächenanteil aller Porenöffnungen mindestens 25 % und vorzugsweise mindestens 40 % der Gesamtoberfläche der Membrane (18) beträgt.

6. Schnüffellecksucher (10) nach einem der vorhergehenden Ansprüche, **dadurch gekennzeichnet, dass** die Membrane (18) eine Scheibe mit einer Dicke von weniger als 100 $\mu$m und vorzugsweise von weniger als 50 $\mu$m ist.

7. Schnüffellecksucher (10) nach einem der vorhergehenden Ansprüche, **dadurch gekennzeichnet, dass** die Membrane (18) eine nanoporöse Scheibe aus Aluminiumoxid ist.

8. Schnüffellecksucher (10) nach einem der vorhergehenden Ansprüche, **dadurch gekennzeichnet, dass** der kleinste Abstand benachbarter Poren (20) kleiner ist als 100 nm und vorzugsweise kleiner als 80 nm ist.

9. Schnüffellecksucher (10) nach einem der vorhergehenden Ansprüche, **dadurch gekennzeichnet, dass** die Membrane (18) mindestens 20 und vorzugsweise mindestens 25 Poren (20) pro $\mu$m$^2$ ihrer Oberfläche aufweist.

**Claims**

1. A sniffer leak detector (10) for sucking in and analyzing gas, comprising a sniffer probe (12), a gas-conveying pump (13) connected to the sniffer probe (12) for sucking in the gas through the sniffer probe (12) with atmospheric pressure, a vacuum pump (15, 16) having a gas inlet (17), the gas inlet having a gas-permeable membrane (18), and comprising a mass spectrometer (14) connected to the vacuum pump (15, 16) for analyzing the sucked-in gas in a high vacuum, wherein the gas flow sucked in by the gas-conveying pump through the sniffer probe is conducted along the membrane (18) such that the membrane (18) allows part of the gas to flow into the prevacuum of the vacuum pump (15, 16) for the mass-spectrometric analysis of the gas in the high vacuum,
**characterized in that**
the membrane (18) is a porous membrane having gas-permeable pores (20), wherein each pore (20) penetrates the membrane (18) completely and the diameters (D) of the pores (20) are less than or equal to the free path length (l) of air at atmospheric pressure and room temperature, and
that the surface ratio of all pores is at least about 20% of the total membrane surface area.

2. The sniffer leak detector (10) of claim 1, **characterized in that** the mass-spectrometric sniffer leak detector (10) is a counterflow leak detector.

3. The sniffer leak detector of claim 1 or 2, **characterized in that** the pore diameters are each less than or equal to 20 nm.

4. The sniffer leak detector (10) of one of the preceding claims, **characterized in that** the diameter of each pore (20) differs from the mean diameter of all pores (20) of the membrane (18) by a maximum of 50% and preferably by less than 20%.

5. The sniffer leak detector (10) of one of the preceding claims, **characterized in that** the total surface ratio of all pore openings is at least 25% and preferably at least 40% of the total surface area of the membrane (18).

6. The sniffer leak detector (10) of one of the preceding claims, **characterized in that** the membrane (18) is a disc with a thickness of less than 100 $\mu$m and preferably less than 50 $\mu$m.

7. The sniffer leak detector (10) of one of the preceding claims, **characterized in that** the membrane (18) is a nanoporous disc of aluminum oxide.

8. The sniffer leak detector (10) of one of the preceding claims, **characterized in that** the smallest distance between adjacent pores (20) is less than 100 nm and preferably less than 80 nm.

9. The sniffer leak detector (10) of one of the preceding claims, **characterized in that** the membrane (18) has at least 20 and preferably at least 25 pores (20) per $\mu$m$^2$ of its surface area.

**Revendications**

1. Renifleur de fuite (10) destiné à aspirer et analyser un gaz, comprenant une sonde renifleuse (12), une pompe d'alimentation en gaz (13) reliée à la sonde renifleuse (12) et destinée à aspirer le gaz à travers la sonde renifleuse (12) à une pression atmosphérique et une pompe à vide (15, 16) pourvue d'une entrée de gaz (17), l'entrée de gaz comportant une membrane perméable aux gaz (18), et un spectromètre de masse (14) relié à la pompe à vide (15, 16) et destiné à analyser le gaz aspiré sous vide poussé, le flux de gaz aspiré par la pompe d'alimentation en gaz à travers la sonde renifleuse étant guidé devant la membrane (18) de sorte que la membrane (18) permette à une partie du gaz de s'écouler dans le pré-vide de la pompe à vide (15, 16) pour effectuer l'analyse spectrométrique de masse du gaz sous vide poussé,
**caractérisé en ce que**
la membrane (18) est une membrane poreuse à pores (20) perméables aux gaz, chaque pore (20) traversant complètement la membrane (18) et les diamètres (D) des pores (20) étant inférieurs ou égaux à la longueur de chemin libre (l) de l'air à la pression atmosphérique et à la température ambiante, et **en ce que**
le pourcentage de surface de tous les pores représentant au moins 20 % environ de la surface totale de la membrane.

2. Renifleur de fuite (10) selon la revendication 1, **caractérisé en ce que** le renifleur de fuite à spectrométrie de masse (10) est un renifleur de fuite à contre-courant.

**3.** Renifleur de fuite (10) selon la revendication 1 ou 2, **caractérisé en ce que** les diamètres de pores sont chacun inférieurs ou égaux à 20 nm.

**4.** Renifleur de fuite (10) selon l'une des revendications précédentes, **caractérisé en ce que** le diamètre de chaque pore (20) diffère au maximum de 50 % et de préférence de moins de 20 % du diamètre moyen de tous les pores (20) de la membrane (18).

**5.** Renifleur de fuite (10) selon l'une des revendications précédentes, **caractérisé en ce que** le pourcentage de surface total de toutes les ouvertures de pores est d'au moins 25 % et de préférence d'au moins 40 % de la surface totale de la membrane (18).

**6.** Renifleur de fuite (10) selon l'une des revendications précédentes, **caractérisé en ce que** la membrane (18) est un disque dont l'épaisseur est inférieure à 100 $\mu$m et de préférence inférieure à 50 $\mu$m.

**7.** Renifleur de fuite (10) selon l'une des revendications précédentes, **caractérisé en ce que** la membrane (18) est un disque nano-poreux en alumine.

**8.** Renifleur de fuite (10) selon l'une des revendications précédentes, **caractérisé en ce que** la plus petite distance entre des pores adjacents (20) est inférieure à 100 nm et de préférence inférieure à 80 nm.

**9.** Renifleur de fuite (10) selon l'une des revendications précédentes, **caractérisé en ce que** la membrane (18) comporte au moins 20, et de préférence au moins 25, pores (20) par $\mu$m$^2$ de sa surface.

Fig.1

Fig.2

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008202212 A1

- DE 4326267 A1